# EUROPÄISCHE PATENTANMELDUNG

(11) **EP 4 821 832 A1**
(43) Veröffentlichungstag der Anmeldung: **14.10.2026**
(21) Anmeldenummer: 26168909.5
(22) Anmeldetag: 30.03.2026
(51) Int. Cl.: B65B 21/12, B65B 21/18, B65B 35/36, B65B 35/40, B65B 43/46, B65B 43/48, B65B 43/52, B65B 61/28, B65B 65/00, B65B 69/00, B65G 15/22, B65B 35/16, B65B 57/02

(54) **AUSPACKER UND VERFAHREN ZUM AUSPACKEN VON GETRÄNKEBEHÄLTERN AUS GETRÄNKEKISTEN**

(30) Priorität: 10.04.2025 DE 102025114272
(71) Anmelder: Krones Aktiengesellschaft, 93073 Neutraubling (DE)
(72) Erfinder: DIETERSBERGER, Martin, 93073 Neutraubling (DE); FELLER, Simon, 93073 Neutraubling (DE); GABLER, Markus, 93073 Neutraubling (DE); SPINDLER, Herbert, 93073 Neutraubling (DE); STADLER, Thomas, 93073 Neutraubling (DE)
(74) Vertreter: Benninger, Johannes

(57) **Zusammenfassung**

Es ist ein Auspacker (1) für Getränkebehälter (2) offenbart. Der Auspacker (1) umfasst eine erste Transporteinrichtung (10) für Getränkekisten (12) mit einer ersten Transportrichtung (TR1) und eine zweite Transporteinrichtung (20) für Getränkekisten (12) mit einer zweiten Transportrichtung (TR2), wobei die erste Transportrichtung (TR1) und die zweite Transportrichtung (TR2) entgegengesetzt zueinander verlaufen und im Wesentlichen parallel zueinander orientiert sind.

Weiter umfasst der Auspacker (1) eine Handhabungseinrichtung oder mehrere Handhabungseinrichtungen, wobei die eine Handhabungseinrichtung allein oder die mehreren Handhabungseinrichtungen in Zusammenarbeit zum Überführen von Getränkekisten (12) von der ersten Transporteinrichtung (10) auf die zweite Transporteinrichtung (20) sowie zur Entnahme von Getränkebehältern (2) aus einer jeweiligen Getränkekiste (12) ausgebildet sind.

## Beschreibung

Die vorliegende Erfindung betrifft einen Auspacker und ein Verfahren zum Auspacken von Getränkebehältern aus Getränkekisten.

Die automatisierte Entnahme von Getränkebehältern aus Getränkekisten erfolgt normalerweise dadurch, dass Getränkekisten zunächst über eine Horizontalfördereinrichtung in den Arbeitsbereich einer Entnahmemaschine transportiert werden. Diese Entnahmemaschine greift sodann Getränkebehälter, die sich hierbei noch in einer jeweiligen Getränkekiste befinden, und setzt die gegriffenen Getränkebehälter an einer vorgegebenen Position ab. Die entnommenen Getränkebehälter können dann einer Reinigungsmaschine zugeführt und nach einer Reinigung erneut mit einem Getränk befüllt werden. Die leeren Getränkekisten werden über die Horizontalfördereinrichtung fortbewegt und ebenfalls gereinigt, so dass in diese nach ihrer Reinigung wieder Getränkebehälter eingebracht werden können.

Wenn ein solcher Auspacker und hierbei insbesondere die Entnahmemaschine gewartet oder repariert werden muss, kann in der Praxis das Problem auftauchen, dass ein Servicetechniker ohne große Umwege nicht unmittelbar zur Entnahmemaschine gelangen kann, da sich die Entnahmemaschine zwischen den Horizontalfördereinrichtungen befinden kann. Ein unmittelbares Passieren der Horizontalfördereinrichtung ist bereits aus sicherheitstechnischen Gründen untersagt, so dass ein Servicetechniker große Umwege in Kauf nehmen muss, um eine Wartung oder eine Reparatur der Entnahmemaschine vollständig durchführen zu können. Auch weitere Bestandteile eines solchen Auspackers sind häufig schwer zugänglich, um Reparaturen oder Servicearbeiten durchzuführen.

Auch hat die Praxis gezeigt, dass bekannte Auspacker einen hohen Platzbedarf besitzen, um in einer Maschinenhalle aufgestellt werden zu können. Wünschenswert sind jedoch gattungsgemäße Auspacker, welche mit geringerem Platzbedarf aufgestellt werden können.

Es ist somit eine Aufgabe der vorliegenden Erfindung, einen gattungsgemäßen Auspacker sowie ein gattungsgemäßes Verfahren bereitzustellen, deren Bestandteile für Wartungsarbeiten und für Reparaturarbeiten einfach zugänglich sind. Zudem ist es eine Aufgabe der vorliegenden Erfindung, einen gattungsgemäßen Auspacker und ein gattungsgemäßes Verfahren bereitzustellen, die einen geringeren Platzbedarf benötigen.

Die obigen Aufgaben werden mit den Gegenständen gelöst, welche die Merkmale in den unabhängigen Ansprüchen umfassen. Weitere vorteilhafte Ausgestaltungen werden durch die Unteransprüche beschrieben.

Die Erfindung betrifft einen Auspacker für Getränkebehälter. Bei den Getränkebehältern kann es sich um Getränkeflaschen und insbesondere um Glasflaschen handeln. Was hier als Getränkebehälter bezeichnet wird, kann grundsätzlich als Primärverpackung betrachtet werden, insbesondere zur Abgrenzung gegen die nachfolgend noch genauer betrachteten Sekundärverpackungen oder Umverpackungen, in welche die Getränkebehälter aufgenommen sein und aus denen sie entnommen werden können.

Der Auspacker umfasst eine erste Transporteinrichtung für Getränkekisten oder andere Umverpackungen mit einer ersten Transportrichtung und eine zweite Transporteinrichtung für Getränkekisten mit einer zweiten Transportrichtung, wobei die erste Transportrichtung und die zweite Transportrichtung entgegengesetzt zueinander verlaufen und im Wesentlichen parallel zueinander orientiert sind. Die erste Transporteinrichtung und die zweite Transporteinrichtung können jeweils als Horizontalfördereinrichtung ausgebildet sein und jeweils ein umlaufend angetriebenes Fördermittel umfassen, welches eine Aufstandsfläche für Getränkekisten bereitstellt.

Auch kann es sein, dass der Auspacker eine Einhausung besitzt, innerhalb welcher Einhausung die eine Handhabungseinrichtung oder die mehreren Handhabungseinrichtungen angeordnet sind, wobei sich die erste Transporteinrichtung und die zweite Transporteinrichtung jeweils in die Einhausung hinein erstrecken und wobei ein Endbereich der ersten Transporteinrichtung und ein Endbereich der zweiten Transporteinrichtung sich innerhalb der Einhausung befinden. Somit kann es sein, dass die erste Transporteinrichtung und die zweite Transporteinrichtung innerhalb der Einhausung enden.

Die Getränkekisten können insbesondere durch Kunststoff gebildet sein. Davon abgesehen kommen auch weitere Materialien in Betracht, welche der Fachperson bekannt sind und aus diesem Grunde nicht ausdrücklich erwähnt werden. Es sei aber an dieser Stelle betont, dass die hier so bezeichneten Getränkekisten auch durch Kartonkisten oder andere Umverpackungen oder Sekundärverpackungen gebildet sein können. So wird zwar im vorliegenden Ausführungsbeispiel generell von Getränkekisten gesprochen, was aber nicht ausschließt, dass die mittels des Auspackers gehandhabten Getränkebehälter oder Primärverpackungen auch aus anderen Umverpackungen entnommen werden können. So können die Umverpackungen bspw. durch Kartonkisten o. dgl. Behältnisse gebildet sein, so dass der Begriff der Getränkekiste im vorliegenden Zusammenhang als umfassend verstanden werden soll. Es können unter den hier verwendeten Begriff der Getränkekiste somit auch solche Sekundärverpackungen fallen, die im landläufigen Sinne zwar nicht als Getränkekästen bezeichnet werden, die aber dennoch das Merkmal der Sekundärverpackung oder Umverpackung erfüllen.

Bewährt haben sich Ausführungsformen, bei denen die erste Transporteinrichtung und die zweite Transporteinrichtung derart positioniert und insbesondere derart zueinander positioniert sind, dass sie senkrecht zur ersten Transportrichtung und senkrecht zur zweiten Transportrichtung orientiert sind und/oder zumindest abschnittsweise und insbesondere überwiegend oder sogar vollständig miteinander fluchten.

Es kann sein, dass die erste Transporteinrichtung eine erste Transportebene zur Förderung von Getränkekisten oder anderen Umverpackungen zur Verfügung stellt oder ausbildet und dass die zweite Transporteinrichtung eine zweite Transportebene zur Förderung von Getränkekisten oder anderen Umverpackungen zur Verfügung stellt oder ausbildet, wobei sich die erste Transportebene und die zweite Transportebene im Wesentlichen auf gleichen vertikalen Höhenniveaus befinden. Insbesondere können sich die erste Transportebene und die zweite Transportebene auf identischen Höhenniveaus befinden.

Es kann sein, dass die erste Transportrichtung der ersten Transporteinrichtung derart orientiert ist, dass Getränkekisten oder andere Umverpackungen, bspw. Kartonkisten o. dgl., über die erste Transporteinrichtung in die Einhausung hineintransportiert werden können. Weiter kann eine Transportrichtung der zweiten Transporteinrichtung derart orientiert sein, dass Getränkekisten oder andere Umverpackungen, bspw. Kartonkisten o. dgl., über die zweite Transporteinrichtung aus der Einhausung hinaustransportiert werden können.

Der Auspacker kann außerdem in vorteilhafter Ausführungsvariante derart konfiguriert und konstruktiv derart ausgebildet sein, dass Getränkekisten ausschließlich über die erste Transporteinrichtung hineintransportiert werden können und ausschließlich über die zweite Transporteinrichtung aus der Einhausung hinaustransportiert werden können.

Auch kann es sein, dass die zuvor erwähnte Einhausung des Auspackers auf lediglich einer Seite einen über die erste und die zweite Transporteinrichtung bereitgestellten Ein- und Auslauf für Getränkekisten bereitstellt.

Weiter ist denkbar, dass weder die erste Transporteinrichtung noch die zweite Transporteinrichtung die Einhausung des Auspacker in Transportrichtung der ersten Transporteinrichtung verlassen. Insbesondere verlässt keine Transporteinrichtung den Auspacker entlang der ersten Transportrichtung der ersten Transporteinrichtung.

Insbesondere kann es sein, dass sich keine weitere Transporteinrichtung an die erste Transporteinrichtung entlang der ersten Transportrichtung anschließt.

Insbesondere kann es auch sein, dass keine zweite Transporteinrichtung entlang der zweiten Transportrichtung vor der zweiten Transporteinrichtung angeordnet ist.

Insbesondere kann es sein, dass die Getränkekisten den Auspacker bzw. die Einhausung an der derjenigen Seite verlassen, an welcher sie in den Auspacker bzw. in die Einhausung hineintransportiert worden sind.

Insbesondere können entlang einer Strömungsrichtung der Getränkekisten lediglich vor der ersten Transporteinrichtung und nach der zweiten Transporteinrichtung weitere Transporteinrichtungen für Getränkekisten vorgesehen sein.

Insbesondere kann es sein, dass ein Transportpfad für Getränkekisten auf derselben Seite des Auspackers bzw. auf derselben Seite der Einhausung in den Auspacker bzw. in die Einhausung hinein und auch hinausführt.

Auch ist denkbar, dass der Auspacker eine Überschubplatte umfasst, die zwischen der ersten Transporteinrichtung und der zweiten Transporteinrichtung positioniert ist und im Wesentlichen bündig an die erste Transporteinrichtung und an die zweite Transporteinrichtung anschließt. Eine Längserstreckung der Überschubplatte kann hierbei parallel zur ersten Transportrichtung und parallel zur zweiten Transportrichtung verlaufen. Die Überschubplatte kann zum gleitenden Schieben von Getränkekisten von der ersten Transporteinrichtung auf die zweite Transporteinrichtung ausgebildet sein. Eine Ebene der Überschubplatte, entlang der Getränkekisten entlang der Überschubplatte von der ersten Transporteinrichtung auf die zweite Transporteinrichtung schiebbar sind, kann sich auf identischem vertikalem Höhenniveau mit der vorherig bereits erwähnten ersten Transportebene und mit der vorherig bereits erwähnten zweiten Transportebene befinden.

Auch sind Ausführungsformen vorstellbar, bei denen die erste Transporteinrichtung eine erste Transportebene zur Förderung von Getränkekisten ausbildet und bei denen die zweite Transporteinrichtung eine zweite Transportebene zur Förderung von Getränkekisten ausbildet, wobei sich ein Höhenniveau der ersten Transportebene oberhalb oder unterhalb eines Höhenniveaus der zweiten Transportebene befindet.

Der Auspacker umfasst zudem eine Handhabungseinrichtung bzw. genau eine Handhabungseinrichtung oder mehrere Handhabungseinrichtungen. Es ist vorgesehen, dass die eine Handhabungseinrichtung bzw. die genau eine Handhabungseinrichtung allein oder die mehreren Handhabungseinrichtung in Zusammenarbeit zum Überführen von Getränkekisten von der ersten Transporteinrichtung auf die zweite Transporteinrichtung sowie zur Entnahme von Getränkebehältern aus den Getränkekisten ausgebildet sind.

Da die erste Transportrichtung und die zweite Transportrichtung entgegengesetzt zueinander verlaufen und da eine Handhabungseinrichtung das Überführen von Getränkekisten von der ersten Transporteinrichtung auf die zweite Transporteinrichtung übernimmt, besitzt der Auspacker einen kompakten Aufbau und ermöglicht zudem einen einfachen Zugang zum Zwecke einer Wartung oder Reparatur einzelner Bestandteile des Auspacker. Eine solche Ausgestaltung bzw. ein solches Layout hat sich gegenüber bekannten Auspackern bewährt, um einen Auspacker sehr kompakt und platzsparend aufstellen zu können. Ein Bediener oder eine Serviceperson kann sich zwischen gegenüberliegenden Seiten des Auspackers hin und her bewegen, ohne dass der Bediener oder die Serviceperson hierzu Transporteinrichtungen überqueren muss.

Wie es vorhergehend erwähnt wurde, kann es sein, dass die erste Transporteinrichtung eine erste Transportebene zur Förderung von Getränkekisten ausbildet und dass die zweite Transporteinrichtung eine zweite Transportebene zur Förderung von Getränkekisten ausbildet, wobei sich ein Höhenniveau der ersten Transportebene oberhalb oder unterhalb eines Höhenniveaus der zweiten Transportebene befindet. Bei solchen Ausführungsformen hat es sich zudem bewährt, wenn die eine Handhabungseinrichtung oder eine bestimmte Handhabungseinrichtung der mehreren Handhabungseinrichtungen zum Anheben oder zum Absenken von entgegengenommenen Getränkekisten ausgebildet ist, um diese von der ersten Transporteinrichtung an die zweite Transporteinrichtung zu überführen.

Die eine Handhabungseinrichtung bzw. die genau eine Handhabungseinrichtung kann als Industrieroboter bzw. als genau ein Industrieroboter bzw. als Portalroboter bzw. als genau ein Portalroboter ausgebildet sein. Sofern mehrere Handhabungseinrichtungen vorgesehen sind, kann es sein, dass die mehreren Handhabungseinrichtungen durch mehrere Industrieroboter bzw. durch mehrere Portalroboter ausgebildet sind. Bei solchen Ausführungsformen kann es sein, dass eine erste Handhabungseinrichtung ein erstes Arbeitswerkzeug umfasst, über das Getränkekisten von der ersten Transporteinrichtung klemmend entgegengenommen werden können. Die erste Handhabungseinrichtung kann hierbei zudem zum Schieben von klemmend entgegengenommenen Getränkekisten von der ersten Transporteinrichtung auf die zweite Transporteinrichtung ausgebildet sein.

Alternativ oder ergänzend hierzu kann es sein, dass die zweite Handhabungseinrichtung ein zweites Arbeitswerkzeug umfasst, das zur temporären Entgegennahme von Getränkebehältern aus Getränkekisten im Bereich der zweiten Transporteinrichtung ausgebildet ist.

Die zweite Handhabungseinrichtung kann zudem zur Entnahme von entgegengenommenen Getränkebehältern aus Getränkekisten über das zweite Arbeitswerkzeug ausgebildet sein, welche Getränkekisten sich hierbei auf der zweiten Transporteinrichtung befinden.

In diversen Ausführungsformen kann es sein, dass die erste Transporteinrichtung zum geländerlosen Fördern von Getränkekisten ausgebildet ist. Demnach kann es sein, dass sich im Bereich der ersten Transporteinrichtung keine Geländer befinden, die sich parallel zur ersten Transportrichtung erstrecken und zum Führen von Getränkekisten ausgebildet sind.

Alternativ oder ergänzend hierzu kann es sein, dass die zweite Transporteinrichtung zum geländerlosen Fördern von Getränkekisten ausgebildet ist. Demnach kann es sein, dass sich im Bereich der zweiten Transporteinrichtung keine Geländer befinden, die sich parallel zur zweiten Transportrichtung erstrecken und zum Führen von Getränkekisten ausgebildet sind.

Solche Auspacker besitzen einen einfachen Aufbau und ermöglichen zudem, dass Getränkekisten ohne ein Anheben von der ersten Transporteinrichtung oder mit geringem Anheben von der ersten Transporteinrichtung an die zweite Transporteinrichtung überführbar sind.

Alternativ oder ergänzend hierzu kann es sein, dass die eine Handhabungseinrichtung oder eine bestimmte Handhabungseinrichtung der mehreren Handhabungseinrichtungen zum gemeinsamen Entgegennehmen und Überführen jeweils mehrerer Getränkekisten an die zweite Transporteinrichtung ausgebildet ist.

Alternativ oder ergänzend hierzu kann es sein, dass die eine Handhabungseinrichtung oder eine bestimmte Handhabungseinrichtung der mehreren Handhabungseinrichtungen zum Überführen von Getränkekisten an die zweite Transporteinrichtung entlang einer Raumrichtung bewegbar ist, die schräg oder senkrecht zur ersten Transportrichtung und zur zweiten Transportrichtung verläuft.

Alternativ oder ergänzend hierzu kann es sein, dass die eine Handhabungseinrichtung oder eine bestimmte Handhabungseinrichtung der mehreren Handhabungseinrichtungen mehrere Klemm- und/oder Greifelemente besitzt, von denen sich jeweils zwei Klemm- und/oder Greifelemente paarweise gegenüberliegen und von denen jeweils zwei Klemm- und/oder Greifelemente zum Entgegennehmen einer jeweiligen im Bereich der ersten Transporteinrichtung angeordneten Getränkekiste ausgebildet sind. Insbesondere kann es hierbei sein, dass die eine Handhabungseinrichtung oder eine bestimmte Handhabungseinrichtung der mehreren Handhabungseinrichtungen mehrere Paare aus jeweils zwei Klemm- und/oder Greifelementen und vorzugsweise mindestens drei Paare aus jeweils zwei Klemm- und/oder Greifelementen oder genau fünf Paare aus jeweils zwei Klemm- und/oder Greifelementen umfasst.

Alternativ oder ergänzend hierzu kann es sein, dass die eine Handhabungseinrichtung oder eine bestimmte Handhabungseinrichtung der mehreren Handhabungseinrichtungen mehrere über Unterdruck arbeitende Greifinstrumente umfasst, von denen ein jeweiliges Greifinstrument zum Erfassen eines jeweiligen in einer Getränkekiste angeordneten Getränkebehälters ausgebildet ist.

In diversen Ausführungsformen kann der Auspacker eine erste Handhabungseinrichtung und eine zweite Handhabungseinrichtung umfassen. Die erste Handhabungseinrichtung kann zum Überführen von Getränkekisten auf die zweite Transporteinrichtung ausgebildet sein. Die zweite Handhabungseinrichtung kann zur Entnahme von Getränkebehältern aus Getränkekisten ausgebildet sein, welche Getränkekisten mittels der ersten Handhabungseinrichtung auf die zweite Transporteinrichtung überführt worden sind.

Die Aufgabe des Verbringens von Getränkekisten von der ersten Transporteinrichtung an die zweite Transporteinrichtung und die Aufgabe einer Entnahme von Getränkebehältern aus den Getränkekisten im Bereich der zweiten Transporteinrichtung sind hierbei funktional voneinander getrennt, wobei die erste Handhabungseinrichtung das Überführen von Getränkekisten übernimmt und die zweite Handhabungseinrichtung für die Entnahme von Getränkebehältern zuständig ist. Solche Auspacker können mit hoher Taktfrequenz Getränkebehälter aus Getränkekisten entnehmen und leere Getränkekisten abtransportieren.

Vorstellbar ist auch, dass die erste Handhabungseinrichtung zum Überführen von Getränkekisten in eine auf der zweiten Transporteinrichtung ausgebildete definierte Entnahmeposition ausgebildet ist. Hierbei kann es sein, dass die zweite Handhabungseinrichtung zur Entnahme von Getränkebehälter aus den hierbei noch in der definierten Entnahmeposition befindlichen Getränkekisten ausgebildet ist. Bewährt haben sich hierbei Ausführungsformen, bei denen die erste Handhabungseinrichtung derart ausgebildet ist, dass diese Getränkekisten in eine auf der zweiten Transporteinrichtung ausgebildete definierte Entnahmeposition überführt, indem sie definierte Lücken zwischen unmittelbar benachbarten Getränkekisten bildet.

Der Auspacker kann eine Steuereinrichtung umfassen, welche mit der zweiten Transporteinrichtung in Verbindung steht. Die Steuereinrichtung kann derart ausgebildet sein, dass sie eine Förderung von Getränkekisten über die zweite Transporteinrichtung unterbindet, während die erste Handhabungseinrichtung Getränkekisten auf der zweiten Transporteinrichtung in die definierten Entnahmepositionen überführt. Alternativ oder ergänzend hierzu kann die Steuereinrichtung zu einer solchen Ansteuerung der zweiten Transporteinrichtung ausgebildet sein, dass diese eine Förderung von Getränkekisten über einen bestimmten Zeitraum unterbricht oder aussetzt, welcher bestimmte Zeitraum spätestens zu einem Zeitpunkt beginnt, an dem die erste Handhabungseinrichtung eine bestehende Verbindung zu Getränkekisten, die auf die zweite Transporteinrichtung überführt worden sind, aufgehoben hat und welcher bestimmte Zeitraum frühestens dann endet, wenn die zweite Handhabungseinrichtung einen Entnahmevorgang für Getränkebehälter beendet hat.

Es kann sein, dass die eine Handhabungseinrichtung oder eine bestimmte Handhabungseinrichtung der mehreren Handhabungseinrichtungen zu einem Schieben von Getränkekisten von der ersten Transporteinrichtung auf die zweite Transporteinrichtung ausgebildet ist. Bewährt hat es sich hierbei, wenn die eine Handhabungseinrichtung oder eine bestimmte Handhabungseinrichtung der mehreren Handhabungseinrichtung zum Schieben von Getränkekisten entlang einer Raumrichtung bewegbar ist, die schräg oder senkrecht zur ersten Transportrichtung und zur zweiten Transportrichtung verläuft.

Auch kann es sein, dass die eine Handhabungseinrichtung oder eine bestimmte Handhabungseinrichtung der mehreren Handhabungseinrichtungen zu einem Anheben von Getränkekisten und zu einem Umsetzen von angehobenen Getränkekisten von der ersten Transporteinrichtung auf die zweite Transporteinrichtung ausgebildet ist. Bei solchen Ausführungsform kann es in diversen Ausführungsformen, jedoch nicht zwingend, sein, dass sich gemäß der vorhergehenden Beschreibung ein Höhenniveau der ersten Transportebene der ersten Transporteinrichtung oberhalb oder unterhalb eines Höhenniveaus der zweiten Transportebene der zweiten Transporteinrichtung befindet.

Bewährt haben sich auch Ausführungsformen, bei denen
- ausschließlich die eine Handhabungseinrichtung oder ausschließlich eine bestimmte Handhabungseinrichtung der mehreren Handhabungseinrichtungen zum Überführen von Getränkekisten von der ersten Transporteinrichtung auf die zweite Transporteinrichtung ausgebildet ist und/oder bei denen
- keine umlaufenden Bänder vorgesehen sind, über welche umlaufenden Bänder Getränkekisten von der ersten Transporteinrichtung an die zweite Transporteinrichtung überführt werden und/oder bei denen
- die erste Transporteinrichtung und die zweite Transporteinrichtung unterschiedliche Endbereich besitzen und/oder bei denen
- es sich bei der ersten Transporteinrichtung und bei der zweiten Transporteinrichtung um separate Transporteinrichtungen handelt, welche voneinander entkoppelt sind, wobei keine strömungstechnische Verbindung zwischen der ersten Transporteinrichtung und der zweiten Transporteinrichtung über ein Transportband besteht. Es kann hierbei sinnvollerweise sein, dass die erste Transporteinrichtung mindestens einen ersten Aktuator und mindestens ein erstes umlaufend über den mindestens einen ersten Aktuator angetriebenes Fördermittel umfasst, bei welchem mindestens einen ersten umlaufend angetriebenen Fördermittel es sich insbesondere um mindestens ein erstes umlaufend angetriebenes Transportband handeln kann. Die zweite Transporteinrichtung kann zudem mindestens einen zweiten Aktuator und mindestens ein zweites umlaufend über den mindestens einen zweiten Aktuator angetriebenes Fördermittel umfassen, bei welchem mindestens einen zweiten umlaufend angetriebenen Fördermittel es sich insbesondere um mindestens ein zweites umlaufend angetriebenes Transportband handeln kann.

Auch haben sich Ausführungsformen bewährt, bei denen die erste Transporteinrichtung unterbrechungsfrei angetrieben ist. Solche Ausführungsformen zeichnen sich durch einen hohen Durchsatz und durch einen geringen Verschleiß der ersten Transporteinrichtung aus, da ein Arbeiten der ersten Transporteinrichtung mit Unterbrechungen zu einem vorzeitigen Verschleiß führen kann.

Auch kann es sein, dass der Auspacker eine dritte Transporteinrichtung umfasst, wobei die eine Handhabungseinrichtung allein oder eine bestimmte Handhabungseinrichtung der mehreren Handhabungseinrichtungen zum Absetzen von Getränkebehältern, die aus Getränkekisten entnommen wurden, auf der dritten Transporteinrichtung ausgebildet sind. Bewährt haben sich hierbei Ausführungsformen, bei denen die erste Transporteinrichtung und die zweite Transporteinrichtung auf derselben Seite der dritten Transporteinrichtung angeordnet sind.

Insbesondere hat es sich bewährt, wenn die zweite Transporteinrichtung zudem zwischen der ersten Transporteinrichtung und der dritten Transporteinrichtung angeordnet ist. Es kann hierbei sein, dass zwischen der zweiten Transporteinrichtung und der dritten Transporteinrichtung ein senkrecht zur zweiten Transportrichtung orientierter Abstand mit einer Größe von wenigstens 50cm ausgebildet ist. Hierdurch kann sein Bediener oder eine mit der Wartung oder Reparatur des Auspackers zuständige Person über diesen Abstand zwischen die zweite Transporteinrichtung und die dritte Transporteinrichtung gelangen und ggf. Komponenten des Auspackers warten oder reparieren.

Die dritte Transporteinrichtung kann zum Fördern von Getränkebehältern entlang einer dritten Transportrichtung ausgebildet sein, welche dritte Transportrichtung parallel zur ersten Transportrichtung und parallel zur zweiten Transportrichtung verläuft.

In bewährten Ausführungsformen umfasst der Auspacker einen Anschlag für Getränkekisten, der abgestimmt auf das Überführen von Getränkekisten im Bereich der ersten Transporteinrichtung entlang der ersten Transportrichtung motorisch hin und her bewegbar ausgebildet ist. Somit kann es sein, dass der Anschlag derart bewegbar ausgebildet ist, dass der Anschlag mit den Getränkekisten mitbewegt wird, wenn sich die Getränkekisten auf der ersten Transporteinrichtung befinden. Hierbei kann der Anschlag mit einer zuvorderst transportierten Getränkekiste während einer Entgegennahme über die eine Handhabungseinrichtung bzw. während einer Entgegennahme über eine bestimmte Handhabungseinrichtung der mehreren Handhabungseinrichtungen in Oberflächenkontakt stehen.

Sofern der Auspacker einen Anschlag umfasst, kann es sein, dass der Anschlag einseitig im Bereich der ersten Transporteinrichtung gelagert ist. Die Lagerung kann an derjenigen Seite der ersten Transporteinrichtung erfolgen, welche der zweiten Transporteinrichtung und/oder der dritten Transporteinrichtung abgewandt ist. Durch die einseitige Lagerung besitzt der Auspacker einen einfachen Aufbau. Zudem wird eine Möglichkeit geschaffen, bei der Getränkekisten einfach und ohne zusätzliche Schritte von der ersten Transporteinrichtung auf die zweite Transporteinrichtung geschoben werden können, da eine zweiseitige Lagerung des Anschlags ein Überschieben erschweren oder sogar unmöglich machen kann.

Die Erfindung betrifft zudem eine Verwendung eines Auspackers gemäß einem Ausführungsbeispiel der vorhergehenden Beschreibung für Getränkekisten, die durch Kunststoff gebildet sind. Insbesondere kann die Erfindung auch eine Verwendung eines Auspackers gemäß einem Ausführungsbeispiel der vorhergehenden Beschreibung für Getränkekisten betreffen, die durch Kunststoff gebildet sind und zudem für Getränkebehälter, die durch Glasflaschen gebildet sind.

Weiter betrifft die Erfindung ein Verfahren zum Auspacken von Getränkebehältern aus Getränkekisten, bei dem Getränkekisten, die jeweils mindestens einen Getränkebehälter aufgenommen haben, über eine erste Transporteinrichtung entlang einer ersten Transportrichtung bewegt werden. Die vorhergehend erwähnten Ausführungsformen eines Auspackers können zur Durchführung der Ausführungsformen des nachfolgend beschriebenen Verfahrens ausgebildet sein. Weiter können die nachfolgend beschriebenen Ausführungsformen des erfindungsgemäßen Verfahrens von einem Auspacker gemäß einer der vorhergehend beschriebenen Ausführungsformen durchgeführt werden. Merkmale, welche vorhergehend bereits zu diversen Ausführungsformen des Auspackers erwähnt wurden, können auch bei den nachfolgend beschriebenen Ausführungsformen des erfindungsgemäßen Verfahrens vorgesehen sein, ohne erneut erwähnt zu werden. Auch können die nachfolgend zu den Ausführungsformen des erfindungsgemäßen Verfahrens erwähnten Merkmale bei den vorhergehend beschriebenen Ausführungsformen des Auspackers vorgesehen sein, ohne erneut erwähnt zu werden.

Bei dem Verfahren sind eine Handhabungseinrichtung oder mehrere Handhabungseinrichtungen vorgesehen, welche eine Handhabungseinrichtung allein oder welche mehreren Handhabungseinrichtung in Zusammenarbeit Getränkekisten von der ersten Transporteinrichtung an eine zweite Transporteinrichtung überführen und Getränkebehälter aus den Getränkekisten entnehmen. Hierbei ist vorgesehen, dass die zweite Transporteinrichtung nach einer Entnahme der jeweiligen Getränkebehälter leere Getränkekisten in einer zweiten Transportrichtung abtransportiert, welche zweite Transportrichtung entgegengesetzt und parallel zur ersten Transportrichtung verläuft.

In diversen Ausführungsformen kann demnach die eine Handhabungseinrichtung bzw. die genau eine Handhabungseinrichtung allein sowohl Getränkekisten von der ersten Transporteinrichtung an eine zweite Transporteinrichtung überführen und zudem Getränkebehälter aus den Getränkekisten entnehmen. Solche Ausführungsformen sind einfach aufgebaut und vergleichsweise günstig in der Anschaffung, da sie lediglich eine Handhabungseinrichtung benötigen, um sowohl die Aufgabe des Überführens von Getränkekisten als auch die Entnahme von Getränkebehältern aus Getränkekisten zu übernehmen.

In weiteren Ausführungsformen können eine erste Handhabungseinrichtung und eine zweite Handhabungseinrichtung vorgesehen sein. Die erste Handhabungseinrichtung kann Getränkekisten an die zweite Transporteinrichtung überführen. Zudem kann die zweite Handhabungseinrichtung Getränkebehälter aus den Getränkekisten entnehmen, während sich die Getränkekisten auf der zweiten Transporteinrichtung befinden.

Weiter kann es sein, dass die erste Handhabungseinrichtung Getränkekisten in eine definierte Entnahmeposition auf die zweite Transporteinrichtung überführt, woraufhin die zweite Handhabungseinrichtung Getränkebehälter aus den Getränkekisten entnimmt, während sich die Getränkekisten hierbei noch in der definierten Entnahmeposition befinden.

Auch kann es sein, dass die eine Handhabungseinrichtung oder eine bestimmte Handhabungseinrichtung der mehreren Handhabungseinrichtungen Getränkekisten von der ersten Transporteinrichtung auf die zweite Transporteinrichtung schiebt. Denkbar ist aber auch, dass die eine Handhabungseinrichtung oder eine bestimmte Handhabungseinrichtung der mehreren Handhabungseinrichtungen Getränkekisten anhebt oder absenkt und die angehobenen oder abgesenkten Getränkekisten von der ersten Transporteinrichtung auf die zweite Transporteinrichtung umsetzt. Insbesondere kann es hierbei sein, dass die eine Handhabungseinrichtung oder eine bestimmte Handhabungseinrichtung der mehreren Handhabungseinrichtungen Getränkekisten anhebt oder absenkt und die angehobenen oder abgesenkten Getränkekisten von einer ersten Transportebene der ersten Transporteinrichtung auf eine zweite Transportebene der zweiten Transporteinrichtung umsetzt, wobei sich die zweite Transportebene oberhalb oder unterhalb eines Höhenniveaus der ersten Transportebene befindet.

Denkbar ist auch, dass
- ausschließlich die eine Handhabungseinrichtung oder ausschließlich eine bestimmte Handhabungseinrichtung der mehreren Handhabungseinrichtungen Getränkekisten von der ersten Transporteinrichtung auf die zweite Transporteinrichtung überführt bzw. dass
- keine umlaufenden Bänder vorgesehen sind, über welche umlaufenden Bänder Getränkekisten von der ersten Transporteinrichtung an die zweite Transporteinrichtung überführt werden.

Es kann sein, dass die erste Transporteinrichtung unterbrechungsfrei angetrieben wird und Getränkekisten kontinuierlich in einen Arbeitsbereich der einen Handhabungseinrichtung oder in einen Arbeitsbereich einer bestimmten Handhabungseinrichtung der mehreren Handhabungseinrichtungen fördert.

Es haben sich Ausführungsformen bewährt, bei denen die erste Transporteinrichtung derart konfiguriert ist, dass diese weiterhin angetrieben wird, während die eine Handhabungseinrichtung allein oder die mehreren Handhabungseinrichtungen in Zusammenarbeit Getränkekisten von der ersten Transporteinrichtung auf die zweite Transporteinrichtung überführen und einen Getränkebehälter oder mehrere Getränkebehälter aus einer jeweiligen Getränkekiste entnehmen.

Weiter kann es sein, dass eine jeweilige entlang der ersten Transportrichtung zuvorderst befindliche Getränkekiste mit einem Anschlag in Kontakt gebracht wird, welcher Anschlag mit den Getränkekisten vor einem Überführen an die zweite Transporteinrichtung mitbewegt wird.

Die eine Handhabungseinrichtung oder eine bestimmte Handhabungseinrichtung der mehreren Handhabungseinrichtungen kann ggf. aus Getränkekisten entnommene Getränkebehälter auf einer dritten Transporteinrichtung absetzen, welche dritte Transporteinrichtung die abgesetzten Getränkebehälter entlang einer dritten Transportrichtung abtransportiert, welche dritte Transportrichtung parallel zur ersten Transportrichtung und parallel zur zweiten Transportrichtung verläuft.

Auch kann es sein, dass die eine Handhabungseinrichtung oder eine bestimmte Handhabungseinrichtung der mehreren Handhabungseinrichtungen geschwindigkeitssynchron zu einer Transportgeschwindigkeit der ersten Transporteinrichtung und entlang der ersten Transportrichtung bewegt wird und hierbei mehrere Getränkekisten von der ersten Transporteinrichtung erfasst und anschließend an die zweite Transporteinrichtung überführt.

Alternativ oder ergänzend hierzu kann es zudem sein, dass die eine Handhabungseinrichtung oder eine bestimmte Handhabungseinrichtung der mehreren Handhabungseinrichtungen Getränkekisten, die zum Überführen an die zweite Transporteinrichtung vorgesehen sind, entgegennimmt und die entgegengenommenen Getränkekisten gegenüber einer Transportgeschwindigkeit der ersten Transporteinrichtung zunächst beschleunigt, wodurch ein Abstand zwischen den entgegengenommenen Getränkekisten und weiteren noch auf der ersten Transporteinrichtung befindlichen Getränkekisten gebildet wird, worauf folgend die wenigstens eine Handhabungseinrichtung die entgegengenommenen Getränkekisten zur zweiten Transporteinrichtung bewegt.

Alternativ oder ergänzend hierzu kann es sein, dass die eine Handhabungseinrichtung oder eine bestimmte Handhabungseinrichtung der mehreren Handhabungseinrichtungen mindestens eine auf der ersten Transporteinrichtung befindliche Getränkekiste entlang der ersten Transportrichtung gegenüber nachfolgenden Getränkekisten distanziert, bevor die eine Handhabungseinrichtung oder die bestimmte Handhabungseinrichtung der mehreren Handhabungseinrichtungen die distanzierte Getränkekiste von der ersten Transporteinrichtung an die zweite Transporteinrichtung überführt.

Eine weitere Erfindung betrifft einen Auspacker für Getränkebehälter, welcher eine Einhausung sowie genau eine erste Transporteinrichtung, über welche Getränkekisten mit hierin aufgenommenen Getränkebehältern in die Einhausung transportierbar sind und genau eine zweite Transporteinrichtung, über welche leere Getränkekisten aus der Einhausung hinaustransportierbar sind, umfasst. Der Auspacker umfasst hierbei zudem eine in der Einhausung angeordnete Handhabungseinrichtung oder mehrere in der Einhausung angeordnete Handhabungseinrichtungen, wobei die eine Handhabungseinrichtung allein oder die mehreren Handhabungseinrichtungen in Zusammenarbeit zum Überführen von Getränkekisten von der ersten Transporteinrichtung auf die zweite Transporteinrichtung sowie zur Entnahme von Getränkebehältern aus den Getränkekisten ausgebildet sind. Bei dem Auspacker ist zudem vorgesehen, dass die erste Transporteinrichtung und die zweite Transporteinrichtung auf einer gemeinsamen Seite einen Ein- und Auslauf für Getränkekisten ausbilden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

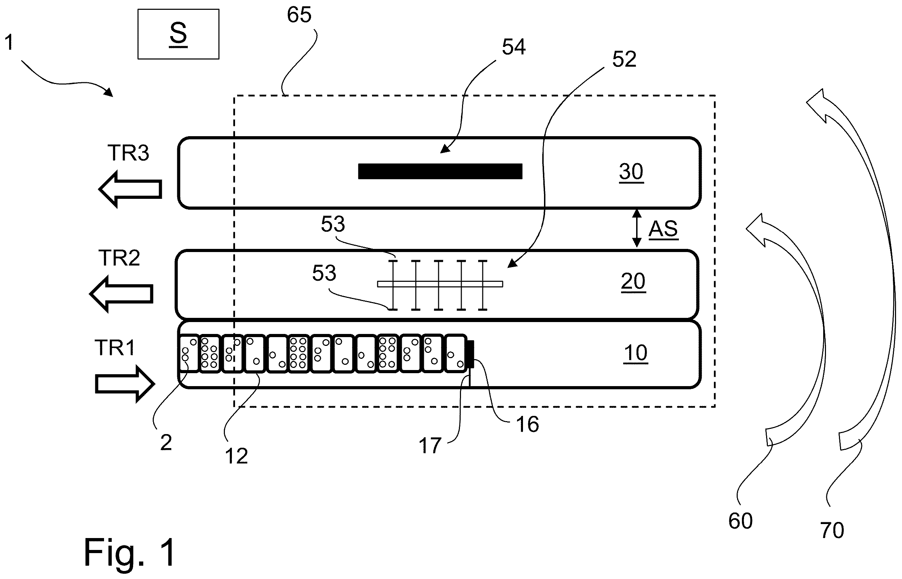

Figuren 1 bis 8 zeigen schematische Ansichten einer Ausführungsform eines erfindungsgemäßen Auspackers und verdeutlichen Schritte, wie sie in diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Die Fig. 1 zeigt eine schematische Ansicht einer Ausführungsform eines erfindungsgemäßen Auspackers 1 und einen ersten Schritt, wie er in diversen Ausführungsformen des erfindungsgemäßen Verfahrens vorgesehen sein kann. Der Auspacker 1 kann Getränkebehälter 2 aus Getränkekisten 12 oder anderen Umverpackungen entnehmen. Die entnommenen Getränkebehälter 2 und die entleerten Getränkekisten 12 werden hierauf gereinigt. Nach einer Reinigung werden die Getränkebehälter 2 erneut befüllt und in eine gereinigte Getränkekiste 12 eingebracht. Vorliegend sind die Getränkekisten 12 nicht vollständig befüllt und umfassen jeweils eine unterschiedliche Anzahl an Getränkebehältern 2. Die Anzahl an Getränkebehältern 2, die in einer jeweiligen Getränkekiste 12 aufgenommen sind, kann hierbei variieren. Es kann auch sein, dass sämtliche Getränkekisten 12 vollständig befüllt sind und dass keine teilweise befüllten Getränkekisten 12 vom Auspacker 1 ausgepackt werden.

Es sei an dieser Stelle klarstellend darauf hingewiesen, dass zwar im vorliegenden Ausführungsbeispiel generell von Getränkekisten 12 gesprochen wird, dass dies aber nicht ausschließt, dass die mittels des Auspackers 1 gehandhabten Getränkebehälter 2 auch aus anderen Umverpackungen entnommen werden können, die auch als Sekundärverpackungen zur Aufnahme der als Primärverpackungen zu sehenden Getränkebehälter 2 betrachtet werden können. So können die Umverpackungen grundsätzlich auch durch Kartonkisten o. dgl. Behältnisse gebildet sein, so dass der Begriff der Getränkekiste 12 im vorliegenden Zusammenhang als umfassend verstanden werden soll. Es können unter den hier verwendeten Begriff der Getränkekiste 12 somit auch solche Sekundärverpackungen fallen, die im landläufigen Sinne zwar nicht als Getränkekasten bezeichnet werden, die aber das Merkmal der Sekundärverpackung oder Umverpackung erfüllen.

Der Auspacker 1 umfasst eine erste Transporteinrichtung 10, eine zweite Transporteinrichtung 20 und eine dritte Transporteinrichtung 30. Bestandteil des Auspackers 1 sind zudem eine erste Handhabungseinrichtungen und eine zweite Handhabungseinrichtung, die in Zusammenarbeit zum Überführen von Getränkekisten 12 von einer ersten Transporteinrichtung 10 auf eine zweite Transporteinrichtung 20 sowie zur Entnahme von Getränkebehältern 2 aus den bereits auf die zweite Transporteinrichtung 20 überführten Getränkekisten 12 ausgebildet sind.

Denkbar ist auch, dass anstelle der nachfolgend beschriebenen ersten Handhabungseinrichtung und zweiten Handhabungseinrichtung lediglich eine Handhabungseinrichtung vorgesehen ist. Sofern dies der Fall ist, kann die eine Handhabungseinrichtung allein die nachfolgend zur ersten Handhabungseinrichtung und zur zweiten Handhabungseinrichtung beschriebenen Aufgaben und Funktionen vollständig übernehmen.

Bezugsziffer 65 verweist in Fig. 1 auf eine Einhausung, innerhalb welcher Einhausung 65 die erste Handhabungseinrichtung und die zweite Handhabungseinrichtung angeordnet sind. Die erste Transporteinrichtung 10, die zweite Transporteinrichtung 20 und die dritte Transporteinrichtung 30 erstrecken sich in die Einhausung 65 hinein, wobei sich ein jeweiliger Endbereich der ersten Transporteinrichtung 10, der zweiten Transporteinrichtung 20 und der dritten Transporteinrichtung 30 innerhalb der Einhausung 65 befindet.

Von der ersten Handhabungseinrichtung ist aus Gründen der Übersichtlichkeit lediglich ihr erstes Arbeitswerkzeug 52 zu erkennen ist, welches von einem als Bestandteil der ersten Handhabungseinrichtung ausgebildeten und nicht mit dargestellten Portalroboter getragen und geführt wird. Bei dem ersten Arbeitswerkzeug 52 handelt es sich um ein Greifwerkzeug, das zur gemeinsamen und klemmenden Entgegennahme mehrerer Getränkekisten 12 ausgebildet ist. Auch von der zweiten Handhabungseinrichtung ist lediglich das zweite Arbeitswerkzeug 54 schematisch dargestellt, welches in der Praxis von einem als Bestandteil der zweiten Handhabungseinrichtung ausgebildeten Portalroboter getragen und geführt wird. Das zweite Arbeitswerkzeug 54 umfasst mehrere Sauginstrumente, über die das zweite Arbeitswerkzeug 54 eine Verbindung zu den Getränkebehältern 2 über Unterdruck herstellen kann, um die Getränkebehälter 2 nachfolgend über das zweite Arbeitswerkzeug 54 bzw. über die zweite Handhabungseinrichtung aus den Getränkekisten 12 zu entnehmen.

Um entnommene Getränkebehälter 2 einer weiteren Verwendung zuzuführen, umfasst der Auspacker 1 eine dritte Transporteinrichtung 30, auf der die entnommenen Getränkebehälter 2 abtransportiert werden. Die erste Transporteinrichtung 10, die zweite Transporteinrichtung 20 und die dritte Transporteinrichtung 30 sind derart angeordnet, dass sich die zweite Transporteinrichtung 20 zwischen der ersten Transporteinrichtung 10 und der dritten Transporteinrichtung 30 befindet. Zwischen der zweiten Transporteinrichtung 20 und der dritten Transporteinrichtung 30 ist zudem ein Abstand AS ausgebildet. Dieser Abstand AS hat mindestens eine solche Breite, dass ein Benutzer im Bereich des ausgebildeten Abstandes entlang der zweiten Transporteinrichtung 20 bzw. entlang der dritten Transporteinrichtung 30 gehen kann, um ggf. Wartungs- und/oder Reparaturarbeiten am Auspacker 1 vorzunehmen. Der Abstand AS beträgt mindestens 50 cm, kann jedoch in der Praxis auch größer ausgebildet sein.

In der Praxis besteht bei Auspackern, die aus dem Stand der Technik bekannt sind, häufig ein Problem, wenn Reparaturarbeiten am Auspacker vorgenommen werden müssen. Transporteinrichtungen erstrecken sich regelmäßig linear bis zu einer nächsten Station, wodurch bekannte Auspacker einen großen Aufbau besitzen und wodurch die Zugänglichkeit einzelner Komponenten des Auspackers erschwert wird.

So kann es beispielsweise sein, dass über Transporteinrichtungen hinweggestiegen werden muss, um auf gegenüberliegende Seiten zu gelangen oder dass lange Umwege in Kauf genommen werden müssen, um Wartungs- oder Reparaturarbeiten durchführen zu können. Der Auspacker 1 kann ohne solche Probleme aufgestellt werden und ohne solche Probleme arbeiten. Wie es in Fig. 1 angedeutet ist, werden Getränkekisten 12 über die erste Transporteinrichtung 10 entlang einer ersten Transportrichtung TR1 als Kontaktföderung transportiert, bei welcher Kontakförderung unmittelbar benachbarte Getränkekisten 12 aneinander anstehen. Über die zweite Transporteinrichtung 20 erfolgt ein Rücktransport von entleerten Getränkekisten 12 entlang einer zweiten Transportrichtung TR2, wobei die erste Transportrichtung TR1 und die zweite Transportrichtung TR2 entgegengesetzt und parallel zueinander verlaufen. Eine unmittelbare Strömungsverbindung zum Umleiten von Getränkekisten 12 von der ersten Transporteinrichtung 10 auf die zweite Transporteinrichtung 20 existiert nicht. Sämtliche Getränkekisten 12 werden von der ersten Handhabungseinrichtung bzw. vom ersten Arbeitswerkzeug 52 der ersten Handhabungseinrichtung umgesetzt und gelangen hierbei von der ersten Transporteinrichtung 10 auf die zweite Transporteinrichtung 20.

Hieraus ergibt sich ein Vorteil im Layout gegenüber bekannten Auspackern. Die Fig. 1 deutet hierbei auf Verweis mit Bezugsziffer 60 einen ersten Weg an, den ein Bediener oder eine mit der Wartung oder der Reparatur des Auspackers 1 zuständige Person einschlagen kann. Wie es vorhergehend bereits erwähnt wurde, kann diese Person oder der Bediener sich im Bereich des Abstandes AS entlang der zweiten Transporteinrichtung 20 und entlang der dritten Transporteinrichtung 30 bewegen, um Wartungs- oder Reparaturarbeiten an der ersten Transporteinrichtung 10 und an der zweiten Transporteinrichtung 20 vorzunehmen. Auch die erste Handhabungseinrichtung und die zweite Handhabungseinrichtung können dort ggf. gewartet oder repariert werden, da vorteilhafterweise zwischen der ersten Transporteinrichtung 10 und der zweiten Transporteinrichtung 20 keine unmittelbare Strömungsverbindung besteht und das Überführen von Getränkekisten 12 ausschließlich über die erste Handhabungseinrichtung bzw. über das erste Arbeitswerkzeug 52 erfolgt.

Sofern Wartungsarbeiten oder Reparaturarbeiten an der zweiten Handhabungseinrichtung oder an der dritten Transporteinrichtung 30 vorgenommen werden sollen, kann die vorherig erwähnte Person oder der Bediener auch entlang des zweiten Weges 70 zur gegenüberliegenden Seite des Auspackers 1 gelangen. Das in Fig. 1 dargestellte Layout mit den entgegengesetzt und parallel zueinander orientierten Transportrichtung TR1 und TR2 der ersten Transporteinrichtung 10 und der zweiten Transporteinrichtung 20 besitzt somit zahlreiche Vorteile im Hinblick auf eine notwendige Wartung oder Reparatur von einzelnen Komponenten und wirken sich zudem vorteilhaft auf die Zugänglichkeit einzelner Bestandteile des Auspackers 1 aus.

Wie es bereits erwähnt wurde, werden Getränkekisten 12 über die erste Transporteinrichtung 10 als Kontaktförderung transportiert, bei welcher Kontaktförderung unmittelbar benachbarte Getränkekisten 12 aneinander anstehen. Die erste Transporteinrichtung 10 bildet einen Zulauf für zu entleerende Getränkekisten 12 mit hierin aufgenommenen Getränkebehältern 2 aus. Vorliegend handelt es sich bei den Getränkebehältern 2 um Getränkeflaschen bzw. um Glasflaschen. Mit der entlang der ersten Transportrichtung TR1 zuvorderst transportierten Getränkekiste 12 steht ein Anschlag 16 in Oberflächenkontakt und gibt die Position der Getränkekiste 12 vor.

Die erste Transporteinrichtung 10 steht mit der Steuereinrichtung S in Verbindung, welche die erste Transporteinrichtung 10 zur kontinuierlichen Förderung von Getränkekisten 12 ansteuert. Die erste Transporteinrichtung 10 wird daher unterbrechungsfrei betrieben und fördert Getränkekisten 12 kontinuierlich entlang der ersten Transportrichtung TR1. Der Anschlag 16 ist über die mechanische Koppelung 17 lediglich einseitig an der ersten Transporteinrichtung 10 gelagert, nämlich an einer Seite, welche der zweiten Transporteinrichtung 20 abgewandt ist. Vorteilhafterweise können Getränkekisten 12 hierdurch einfach auf die zweite Transporteinrichtung 20 geschoben werden, ohne dass die Getränkekisten 12 angehoben werden müssen.

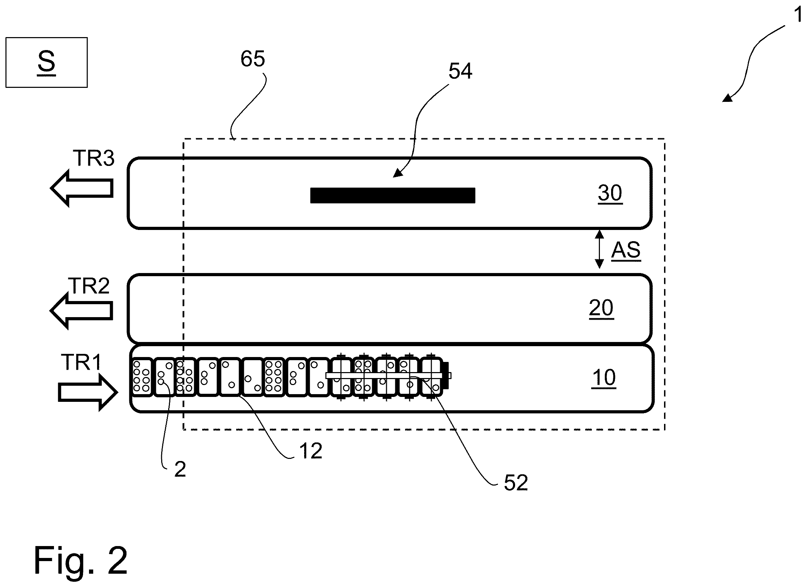

Die weitere Arbeitsweise des Auspackers 1 wird durch die Figuren 2 bis 8 verdeutlicht, wobei Figuren 2 bis 8 die Ausführungsform des Auspackers 1 nach Fig. 1 betreffen. In einem weiteren Schritt nach Fig. 2 wird das erste Arbeitswerkzeug 52 der ersten Handhabungseinrichtung von der zweiten Transporteinrichtung 20 zur ersten Transporteinrichtung 10 bewegt, bis sich das erste Arbeitswerkzeug 52 oberhalb mehrerer gemeinsam entgegenzunehmender Getränkekisten 12 befindet. Da die Getränkekisten 12 über die erste Transporteinrichtung 10 kontinuierlich bzw. unterbrechungsfrei entlang der ersten Transportrichtung TR1 bewegt werden, wir das erste Arbeitswerkzeug 52 zusammen mit den ersten Getränkekisten 12 fortbewegt. Die Bewegungsgeschwindigkeit des ersten Arbeitswerkzeuges 52 ist hierbei identisch zur Fördergeschwindigkeit der ersten Transporteinrichtung 10. Während dieser Bewegung wird das erste Arbeitswerkzeug 52 in Richtung der klemmend entgegenzunehmenden Getränkekisten 12 abgesenkt, bis sich eine jeweilige entgegenzunehmende Getränkekiste 12 zwischen einem jeweiligen Paar an Klemmbacken 53 (vgl. Fig. 1) des ersten Arbeitswerkzeuges 52 befindet. Während einer weiteren Bewegung der Getränkekisten 12 und des Arbeitswerkzeuges 52 entlang der ersten Transportrichtung TR1 führen die Klemmbacken 53 eine Zustellbewegung aus, wodurch mehrere Getränkekisten 12 kraftschlüssig am ersten Arbeitswerkzeug 52 gehalten werden. In Fig. 2 haben die Klemmbacken 53 bereits diese Zustellbewegung ausgeführt. In Fig. 2 sind hierdurch genau fünf Getränkekisten 12 am Arbeitswerkzeug 52 gehalten, wobei in weiteren Ausführungsformen auch eine andere Anzahl an Getränkekisten 12 vom Arbeitswerkzeug 52 erfasst werden kann. Beispielsweise kann es sein, dass genau sechs Getränkekisten 12 am Arbeitswerkzeug 52 gemeinsam gehalten werden.

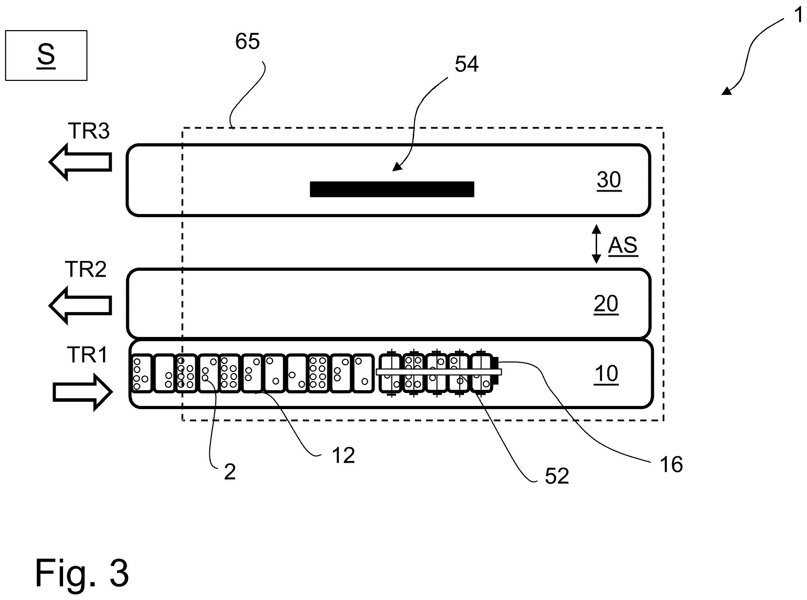

Auf den Verfahrensschritt nach Fig. 2 folgt der Verfahrensschritt nach Fig. 3. Eine Zusammenschau aus Fig. 2 und Fig. 3 verdeutlicht hierbei, dass das erste Arbeitswerkzeug 52 zusammen mit den weiterhin klemmend erfassten Getränkekisten 12 gegenüber einer Fördergeschwindigkeit der ersten Transporteinrichtung 10 beschleunigt wird, wodurch eine Distanz entlang der ersten Transportrichtung TR1 zwischen den klemmend erfassten Getränkekisten 12 und nachfolgenden Getränkekisten 12, die sich noch auf der ersten Transporteinrichtung 10 befinden, entsteht. Sowohl die erste Handhabungseinrichtung, die das erste Arbeitswerkzeug 52 aufweist, als auch der Anschlag 16, welcher mit einer entlang der ersten Transportrichtung TR1 zuvorderst angeordneten Getränkekiste 12 im Bereich der ersten Transporteinrichtung 10 in Oberflächenkontakt steht, sind mit der Steuereinrichtung S verbunden.

Die Steuereinrichtung S gibt sowohl eine Geschwindigkeit für das erste Arbeitswerkzeug 52 als auch eine Geschwindigkeit für den Anschlag 16 vor, so dass das erste Arbeitswerkzeug 52 und der Anschlag 16 bei Distanzierung der klemmend erfassten Getränkekisten 12 gemeinsam gegenüber einer Fördergeschwindigkeit der ersten Transporteinrichtung 10 beschleunigt werden. Die beschriebene Distanzierung bietet den Vorteil, dass sich klemmend erfasste Getränkekiste 12 nicht mit nachfolgenden Getränkekisten 12 verhaken können, was zu Problemen bei der Überführung der klemmend erfassten Getränkekisten 12 an die zweite Transporteinrichtung 20 führen kann. In der Praxis kann regelmäßig eine Distanzierung um einen geringfügigen Weg ausreichen, um solche Probleme zu vermeiden.

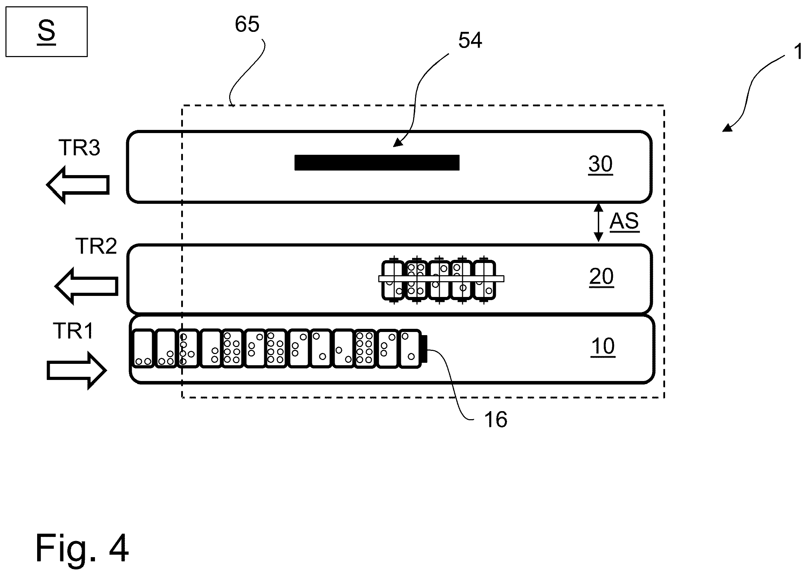

Auf den Verfahrensschritt nach Fig. 3 folgt der Verfahrensschritt nach Fig. 4. Das erste Arbeitswerkzeug 52 bewegt sich ausgehend von der Position nach Fig. 3 zusammen mit den klemmend erfassten Getränkekisten 12 zur zweiten Transporteinrichtung 20. Diese Bewegung erfolgt schräg zur ersten Transportrichtung TR1. Wenn die Getränkekisten 12 die erste Transporteinrichtung 10 verlassen haben, wird der Anschlag 16 entgegengesetzt zur ersten Transportrichtung TR1 zurückbewegt und gelangt hierbei in Oberflächenkontakt mit der zuvorderst angeordneten Getränkekiste 12. Ausgehend von der Position nach Fig. 4 wird der Anschlag 16 erneut mit den Getränkekisten 12 entlang der ersten Transportrichtung TR1 bewegt, bis weitere Getränkekisten 12 vom ersten Arbeitswerkzeug 52 klemmend erfasst wurden und die erste Transporteinrichtung 10 verlassen haben.

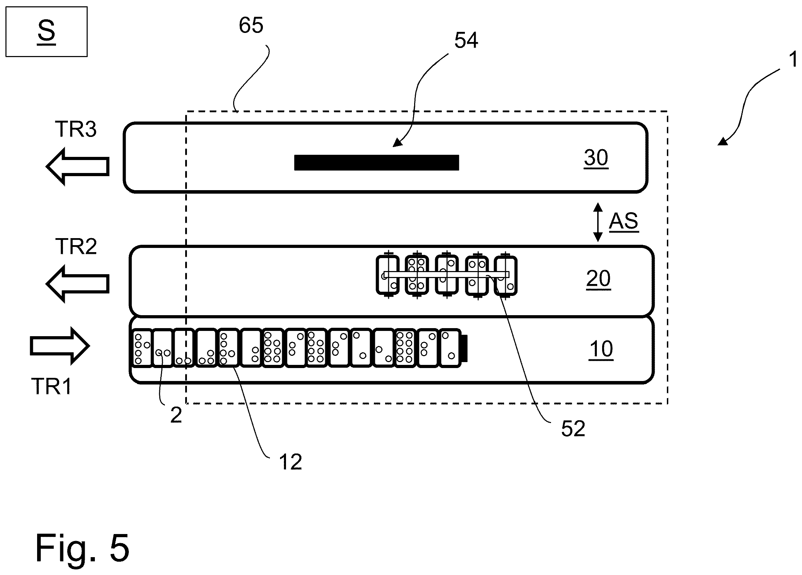

Auf den Verfahrensschritt nach Fig. 4 folgt der Verfahrensschritt nach Fig. 5. Wie es Fig. 5 zeigt, bildet die erste Handhabungseinrichtung über ihr erstes Arbeitswerkzeug 52 zwischen unmittelbar benachbarten Getränkekisten 12, die bereits an die zweite Transporteinrichtung 20 überführt worden sind, eine jeweilige Lücke entlang der zweiten Transportrichtung TR2 aus. Bei dem Ausbilden von Lücken kann die klemmende Verbindung zwischen den Klemmbacken 53 (vgl. Fig. 1) und den Getränkekisten 12 noch ausgebildet sein. Um die Lücken zu erzeugen, vergrößern die Paare an Klemmbacken 53 ihren relativen Abstand entlang der zweiten Transportrichtung TR2 zueinander, bis sie die noch klemmend gehaltenen Getränkekisten 12 in eine vorgegebene Soll-Position überführt haben. In weiteren bevorzugten Ausführungsformen ist jedoch vorgesehen, dass zum Bilden der Lücken die klemmende Verbindung zwischen den Klemmbacken 53 und den Getränkekisten 12 zunächst aufgehoben wird und dass die Getränkekisten 12 über eine Zentriereinrichtung des ersten Arbeitswerkzeuges 52 in ihre jeweilige Soll-Position überführt werden.

Die zweite Transporteinrichtung 20 kann über die Steuereinrichtung S betätigt werden, so dass eine Förderung von Getränkekisten 12 über die zweite Transporteinrichtung 20 temporär unterbunden wird, bis die Getränkekisten 12 in ihre jeweilige Soll-Position überführt worden sind. Die Soll-Positionen der Getränkekisten 12 sind auf eine Entnahme von Getränkebehältern 2 über das zweite Arbeitswerkzeug 54 abgestimmt. In diversen Ausführungsformen kann eine Sensorik vorgesehen sein, die mit der Steuereinrichtung S verbunden ist und zum Überführen der Getränkekisten 12 in die Soll-Positionen Informationen an die Steuereinrichtung über die jeweilige Ist-Position einer jeweiligen Getränkekiste 12 weitergibt. Das Bilden von Lücken kann jedoch in diversen Ausführungsformen auch sensorlos erfolgen. Spätestens nach dem Bilden von Lücken wird eine klemmende Verbindung zwischen dem ersten Arbeitswerkzeug 52 und den Getränkekisten 12 aufgehoben, so dass sich die Getränkekisten 12 ohne Kontakt zum ersten Arbeitswerkzeug 52 auf der zweiten Transporteinrichtung 20 befinden.

Wie aus einer Zusammenschau der Figuren 4 und 5 zudem deutlich wird, werden Getränkekisten 12, die sich auf der ersten Transporteinrichtung 10 befinden, weiterhin entlang der ersten Transportrichtung TR1 gefördert, während das erste Arbeitswerkzeug 52 Lücken zwischen Getränkekisten 12 auf der zweiten Transporteinrichtung 20 ausbildet.

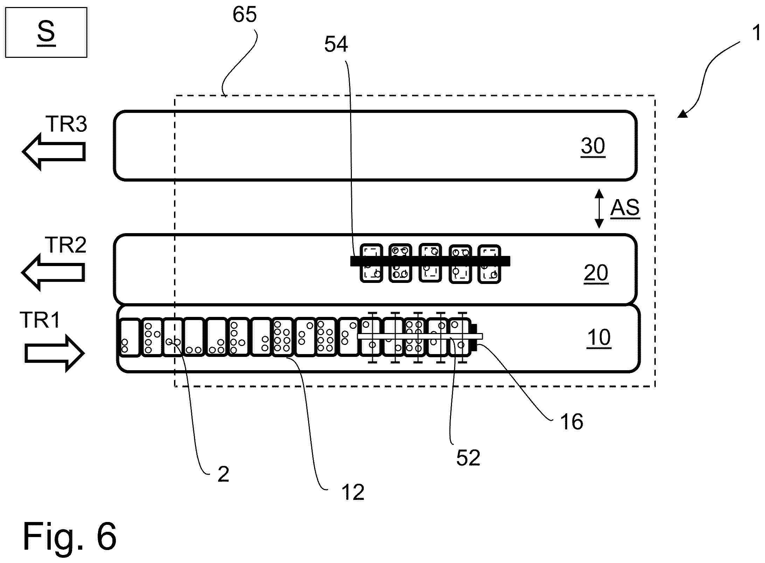

Die Fig. 6 verdeutlicht insbesondere die weitere Vorgehensweise bei einer Entnahme von Getränkebehältern 2 aus den Getränkekisten 12. Nachdem die Getränkekisten 12 über das erste Arbeitswerkzeug 52 in ihre jeweilige Soll-Positionen überführt worden sind, wird das erste Arbeitswerkzeug 52 von der zweiten Transporteinrichtung 20 zur ersten Transporteinrichtung 10 zurückbewegt, bis sich das erste Arbeitswerkzeug 52 erneut über Getränkekisten 12 befindet, welche an die zweite Transporteinrichtung 20 zu überführen sind. Während das erste Arbeitswerkzeug 52 zur ersten Transporteinrichtung 10 zurückbewegt wird, wird auch das zweite Arbeitswerkzeug 54, das als Bestandteil einer zweiten Handhabungseinrichtung ausgebildet ist, bewegt und gelangt hierbei über die jeweiligen Getränkekisten 12, die sich auf der zweiten Transporteinrichtung 20 befinden. Da die zweite Transporteinrichtung 20 zunächst nicht angetrieben wird, haben die Getränkekisten 12 in Fig. 6 ihre Soll-Positionen nach Fig. 5 noch nicht verlassen.

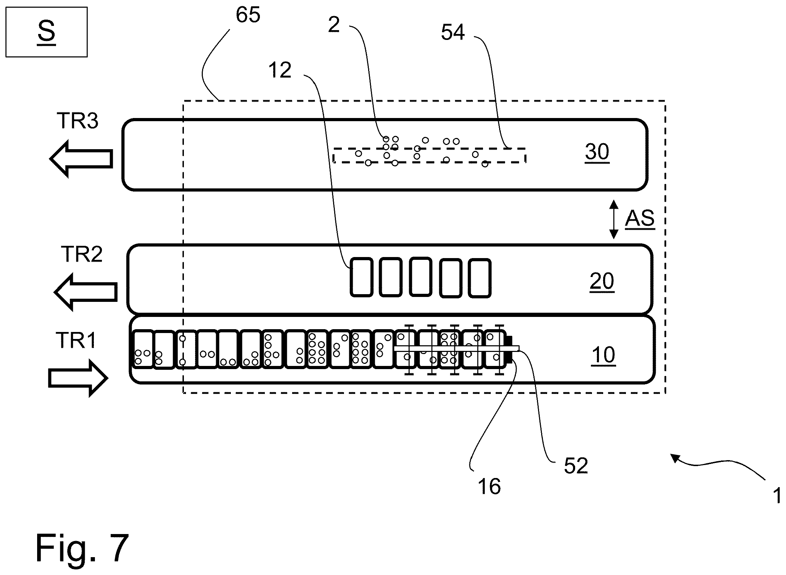

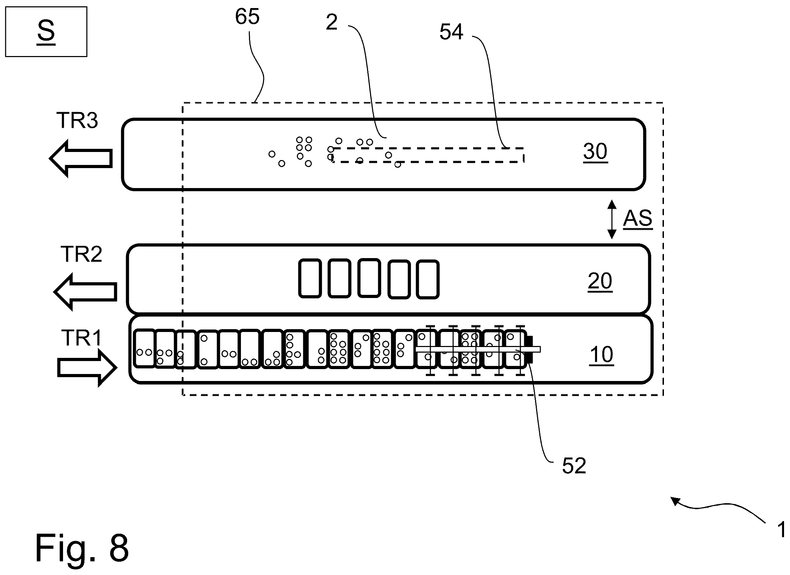

Die Fig. 7 zeigt einen weiteren Verfahrensschritt, welcher an den Schritt nach Fig. 6 anschließt. Das zweite Arbeitswerkzeug 54 hat die Getränkebehälter 2 aus den Getränkekisten 12 entnommen und an eine dritte Transporteinrichtung 30 überführt. Auf der zweiten Transporteinrichtung 20 befinden sich nun leere Getränkekisten 12. Nachdem die Getränkebehälter 2 auf der dritten Transporteinrichtung 30 abgesetzt worden sind oder bereits während einer Transferbewegung der Getränkebehälter 2 zu dritten Transporteinrichtung 30 wird die zweite Transporteinrichtung 20 über die Steuereinrichtung S betätigt und angetrieben. Hierdurch werden die leeren Getränkekisten 12 über die zweite Transporteinrichtung 20 entlang der zweiten Transportrichtung TR2 bewegt. Zeitgleich mit der Bewegung der leeren Getränkekisten 12 über die zweite Transporteinrichtung 20 wird auch die dritte Transporteinrichtung 30 über die Steuereinrichtung S betätigt, so dass die nun auf der dritten Transporteinrichtung 30 abgesetzten Getränkebehälter 2 über die dritte Transporteinrichtung 30 entlang der dritten Transportrichtung TR3 gefördert werden, welche dritte Transportrichtung TR3 parallel zur zweiten Transportrichtung TR2 verläuft. Der weitere Transport der leeren Getränkekisten 12 sowie der Getränkebehälter 2, die auf der dritten Transporteinrichtung 30 abgesetzt worden sind, wird aus einer Zusammenschau der Fig. 7 mit Fig. 8 deutlich. Wie es Figuren 1 bis 8 insgesamt zeigen, wird die erste Transporteinrichtung 10 kontinuierlich betrieben und fördert Getränkekisten 12 unterbrechungsfrei entlang der ersten Transportrichtung TR1. Durch das beschriebene Layout wird ein Auspacker bereitgestellt, der einen platzsparenden Aufbau besitzt und Vorteile bei der Wartung und bei der Reparatur besitzt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

1 Auspacker
2 Getränkebehälter
10 Erste Transporteinrichtung
12 Getränkekiste
16 Anschlag
17 Mechanische Koppelung
20 Zweite Transporteinrichtung
30 Dritte Transporteinrichtung
52 Erstes Arbeitswerkzeug
53 Klemmbacke
54 Zweites Arbeitswerkzeug
60 Erster Weg
65 Einhausung
70 Zweiter Weg
AS Abstand
TR1 Erste Transportrichtung
TR2 Zweite Transportrichtung
TR3 Dritte Transportrichtung
S Steuereinrichtung

## Patentansprüche

1. Auspacker (1) für Getränkebehälter (2), umfassend
- eine erste Transporteinrichtung (10) für Getränkekisten (12) mit einer ersten Transportrichtung (TR1) und eine zweite Transporteinrichtung (TR2) für Getränkekisten (12) mit einer zweiten Transportrichtung (TR2), wobei die erste Transportrichtung (TR1) und die zweite Transportrichtung (TR2) entgegengesetzt zueinander verlaufen und im Wesentlichen parallel zueinander orientiert sind und
- eine Handhabungseinrichtung oder mehrerer Handhabungseinrichtungen, wobei die eine Handhabungseinrichtung allein oder die mehreren Handhabungseinrichtungen in Zusammenarbeit zum Überführen von Getränkekisten (12) von der ersten Transporteinrichtung (10) auf die zweite Transporteinrichtung (20) sowie zur Entnahme von Getränkebehältern (2) aus den Getränkekisten (12) ausgebildet sind.

2. Auspacker (1) nach Anspruch 1, umfassend eine erste Handhabungseinrichtung und eine zweite Handhabungseinrichtung, wobei die erste Handhabungseinrichtung zum Überführen von Getränkekisten (12) von der ersten Transporteinrichtung (10) auf die zweite Transporteinrichtung (20) ausgebildet ist und wobei die zweite Handhabungseinrichtung zur Entnahme von Getränkebehältern (2) aus Getränkekisten (12) ausgebildet ist, welche Getränkekisten (12) mittels der ersten Handhabungseinrichtung auf die zweite Transporteinrichtung (20) überführt worden sind.

3. Auspacker (1) nach Anspruch 2, bei dem die erste Handhabungseinrichtung zum Überführen von Getränkekisten (12) in eine auf der zweiten Transporteinrichtung (20) ausgebildete definierte Entnahmeposition ausgebildet ist und bei dem die zweite Handhabungseinrichtung zur Entnahme von Getränkebehältern (2) aus den hierbei noch in der definierten Entnahmeposition befindlichen Getränkekisten (12) ausgebildet ist.

4. Auspacker (1) nach einem der Ansprüche 1 bis 3, bei dem die eine Handhabungseinrichtung oder eine bestimmte Handhabungseinrichtung der mehreren Handhabungseinrichtungen zu einem Schieben von Getränkekisten (12) von der ersten Transporteinrichtung (10) auf die zweite Transporteinrichtung (20) ausgebildet ist.

5. Auspacker (1) nach einem der Ansprüche 1 bis 4, bei dem ausschließlich die eine Handhabungseinrichtung oder ausschließlich eine bestimmte Handhabungseinrichtung der mehreren Handhabungseinrichtungen zum Überführen von Getränkekisten (12) von der ersten Transporteinrichtung (10) auf die zweite Transporteinrichtung (20) ausgebildet ist.

6. Auspacker (1) nach einem der Ansprüche 1 bis 5, bei dem die erste Transporteinrichtung (10) unterbrechungsfrei angetrieben ist.

7. Auspacker (1) nach einem der Ansprüche 1 bis 6, umfassend eine dritte Transporteinrichtung, wobei die eine Handhabungseinrichtung allein oder eine bestimmte Handhabungseinrichtung der mehreren Handhabungseinrichtungen zum Absetzen von Getränkebehältern, die aus Getränkekisten entnommen wurden, auf der dritten Transporteinrichtung ausgebildet ist.

8. Auspacker (1) nach Anspruch 7, wobei die erste Transporteinrichtung (10) und die zweite Transporteinrichtung (20) auf derselben Seite der dritten Transporteinrichtung (30) angeordnet sind.

9. Auspacker (1) nach einem der Ansprüche 1 bis 8, umfassend einen Anschlag (16) für Getränkekisten (12), der abgestimmt auf das Überführen von Getränkekisten (12) im Bereich der ersten Transporteinrichtung entlang der ersten Transportrichtung motorisch hin und her bewegbar ausgebildet ist.

10. Auspacker (1) nach Anspruch 9, wobei der Anschlag (16) einseitig im Bereich der ersten Transporteinrichtung (10) gelagert ist.

11. Verwendung eines Auspackers (1) nach einem der Ansprüche 1 bis 10 für Getränkekisten (12), die durch Kunststoff gebildet oder aus Kunststoff hergestellt sind.

12. Verfahren zum Auspacken von Getränkebehältern (2) aus Getränkekisten (12), bei welchem Verfahren Getränkekisten (12), die jeweils mindestens einen Getränkebehälter (2) aufgenommen haben, über eine erste Transporteinrichtung (10) entlang einer ersten Transportrichtung (TR1) bewegt werden, wobei eine Handhabungseinrichtung oder mehrere Handhabungseinrichtungen vorgesehen sind, welche eine Handhabungseinrichtung allein oder welche mehreren Handhabungseinrichtungen in Zusammenarbeit und/oder in Zusammenwirkung Getränkekisten (12) von der ersten Transporteinrichtung (10) an eine zweite Transporteinrichtung (20) überführen und Getränkebehälter (2) aus den Getränkekisten (12) entnehmen, wobei die zweite Transporteinrichtung (20) nach einer Entnahme der jeweiligen Getränkebehälter (2) leere Getränkekisten (12) in einer zweiten Transportrichtung (TR2) abtransportiert, welche zweite Transportrichtung (TR2) entgegengesetzt und parallel zur ersten Transportrichtung (TR1) verläuft.

13. Verfahren nach Anspruch 12, wobei eine erste Handhabungseinrichtung und eine zweite Handhabungseinrichtung vorgesehen sind und wobei die erste Handhabungseinrichtung Getränkekisten (12) an die zweite Transporteinrichtung (20) überführt und wobei die zweite Handhabungseinrichtung Getränkebehälter (2) aus den Getränkekisten (12) entnimmt, während sich die Getränkekisten (12) auf der zweiten Transporteinrichtung (20) befinden.

14. Verfahren nach Anspruch 13, bei dem die erste Handhabungseinrichtung Getränkekisten (12) in eine definierte Entnahmeposition auf die zweite Transporteinrichtung (20) überführt, woraufhin die zweite Handhabungseinrichtung Getränkebehälter (2) aus den Getränkekisten (12) entnimmt, während sich die Getränkekisten (12) hierbei noch in der definierten Entnahmeposition befinden.

15. Verfahren nach einem der Ansprüche 12 bis 14, bei dem die eine Handhabungseinrichtung oder eine bestimmte Handhabungseinrichtung der mehreren Handhabungseinrichtungen Getränkekisten (12) von der ersten Transporteinrichtung (10) auf die zweite Transporteinrichtung (20) schiebt.

16. Verfahren nach einem der Ansprüche 12 bis 15, bei dem ausschließlich die eine Handhabungseinrichtung oder ausschließlich eine bestimmte Handhabungseinrichtung der mehreren Handhabungseinrichtungen Getränkekisten (12) von der ersten Transporteinrichtung (10) auf die zweite Transporteinrichtung (20) überführt.

17. Verfahren nach einem der Ansprüche 12 bis 16, bei dem die erste Transporteinrichtung (10) unterbrechungsfrei angetrieben wird und Getränkekisten (12) kontinuierlich in einen Arbeitsbereich der einen Handhabungseinrichtung oder in einen Arbeitsbereich einer bestimmten Handhabungseinrichtung der mehreren Handhabungseinrichtung fördert.

18. Verfahren nach einem der Ansprüche 12 bis 17, bei dem eine jeweilige entlang der ersten Transportrichtung (TR1) zuvorderst befindliche Getränkekiste (12) mit einem Anschlag (16) in Kontakt gebracht wird, welcher Anschlag (16) mit den Getränkekisten (12) vor einem Überführen an die zweite Transporteinrichtung (20) mitbewegt wird.

19. Verfahren nach einem der Ansprüche 12 bis 18, bei dem die eine Handhabungseinrichtung oder eine bestimmte Handhabungseinrichtung der mehreren Handhabungseinrichtungen aus Getränkekisten (12) entnommene Getränkebehälter (2) auf einer dritten Transporteinrichtung (20) absetzt, welche dritte Transporteinrichtung (30) die abgesetzten Getränkebehälter (2) entlang einer dritten Transportrichtung (TR3) abtransportiert, welche dritte Transportrichtung (TR3) parallel zur ersten Transportrichtung (TR1) und parallel zur zweiten Transportrichtung (TR2) verläuft.

20. Verfahren nach einem der Ansprüche 12 bis 19, bei dem die eine Handhabungseinrichtung oder eine bestimmte Handhabungseinrichtungen der mehreren Handhabungseinrichtung geschwindigkeitssynchron zu einer Transportgeschwindigkeit der ersten Transporteinrichtung (20) und entlang der ersten Transportrichtung (TR1) bewegt wird und hierbei mehrere Getränkekisten (12) von der ersten Transporteinrichtung (10) erfasst und anschließend an die zweite Transporteinrichtung (20) überführt.

21. Verfahren nach einem der Ansprüche 12 bis 19, bei dem die eine Handhabungseinrichtung oder eine bestimmte Handhabungseinrichtungen der mehreren Handhabungseinrichtung mindestens eine auf der ersten Transporteinrichtung (10) befindliche Getränkekiste (12) entlang der ersten Transportrichtung (TR1) gegenüber nachfolgenden Getränkekisten (12) distanziert, bevor die eine Handhabungseinrichtung oder die bestimmte Handhabungseinrichtung der mehreren Handhabungseinrichtung die distanzierte Getränkekiste (12) von der ersten Transporteinrichtung (10) an die zweite Transporteinrichtung (20) überführt.
